# EUROPEAN PATENT APPLICATION

(11) **EP 4 239 774 A1**
(43) Date of publication of application: **06.09.2023**
(21) Application number: 22896840.0
(22) Date of filing: 04.11.2022
(51) Int. Cl.: H01M 50/244

(54) **CROSSBEAM, BATTERY RACK, AND BATTERY PACK ASSEMBLY**

(30) Priority: 09.12.2021 CN 202111497220
(71) Applicant: Eve Power Co., Ltd., Jingmen Hubei 448000 (CN); Eve Energy Storage Co., Ltd., Wuhan Hubei 430000 (CN)
(72) Inventor: LU, Yicheng, Jingmen, Hubei 448000 (CN); GONG, Muhong, Jingmen, Hubei 448000 (CN); WEI, Yintao, Jingmen, Hubei 448000 (CN)
(74) Representative: Murgitroyd & Company
(86) International application number: PCT/CN2022/130081
(87) International publication number: WO 2023/103670

(57) **Abstract**

A beam, a battery rack, and a battery pack assembly are provided in the present disclosure. The beam is provided with downwards oblique chutes, so that a roller shaft is slidable and disposed in the chutes. At the same time, a drive positioning member is disposed by extending into or retracting from a lifting groove. Both of the above battery rack and the above battery pack assembly apply the above beam, which has effect of reducing probability of dent deformation of the battery pack.

## Description

This application claims priority to Chinese Patent Application No. 202111497220.6, filed on Dec. 9, 2021. The aforementioned application is herein incorporated by reference in its entirety.

### TECHNICAL FIELD

The present disclosure relates to the technical field of battery technologies, for example, to a beam, a battery rack, and a battery pack assembly.

### BACKGROUND

A battery rack is generally composed of beams and stringers. Each of the stringers is fixed vertically on a horizontal plane, and the beams are fixed on the stringers, thereby forming the battery rack. The battery rack can well fix and support battery packs, so it is widely used in the field of batteries.

The battery packs in related art tend to weigh more, and the battery packs of more than 100 kilograms on the market account for a relatively high proportion, so it is very laborious to push and pull the battery pack on the battery rack. In order to solve the problem, the related art proposes a battery rack with roller provided on the beams thereof. When pushing and pulling the battery pack on the battery rack, the roller can effectively reduce a friction to make the push and pull operation of the battery pack more labor-saving. However, the roller in the related art always protrudes from the beam, the roller protruding from the beam provides a support force for the battery pack when the battery pack is fixedly arranged on the battery rack, the battery pack and the roller are in a surface-to-line contact, the battery pack has a larger weight pressed on the roller for a long time, so a position of the battery pack in contact with the roller is prone to dent deformation.

### SUMMARY

The present disclosure provides a beam capable of achieving effect of raising a roller when using the roller and dropping the roller when the roller is not used.

In a first aspect, a beam is provided according to embodiments of the present disclosure. The beam includes a beam body and further includes:

a rolling support block, fixedly connected with the beam body, herein, an end surface of the rolling support block is level with an end surface of the beam body, and the end surface of the rolling support block is provide with a lifting groove; a first sidewall of the rolling support block is provided with chutes, each of the chutes is downwards oblique and includes a first position and a second position, where the first position is higher than the second position;

a roller assembly, including one or more rollers and a roller shaft, herein, both ends of the roller shaft are slidable and disposed in the chute, and each of the rollers is capable of rolling and disposed in the lifting groove through the roller shaft;

a drive positioning member, disposed by extending into or retracting from the lifting groove, herein, the roller shaft is located in the first position when the drive positioning member extends into the lifting groove and located in the second position when the drive positioning member retracts from the lifting groove.

In an embodiment, the beam further includes a pusher lump , the pusher lump is movably disposed in the lifting groove, an upper surface of the pusher lump is an oblique plane having an oblique direction opposite to an oblique direction of each of the chutes, the roller shaft is connected with the oblique plane to move, and the drive positioning member is connected with and drives the pusher lump when the drive positioning member extends into the lifting groove.

In an embodiment, the drive positioning member is a bolt passing through a second sidewall of the rolling support block and threaded with the second sidewall.

In an embodiment, the second sidewall is provided with a thickened wall protruded thereon, and the bolt successively passes through the thickened wall and the second sidewall, and is threaded with the thickened wall.

In an embodiment, a number of the rollers is two, the two rollers are disposed on both sides of the roller shaft, and the pusher lump is disposed between the two rollers.

In an embodiment, a number of the chutes is two, and two ends of the roller shaft are slidable and disposed in the two chutes, respectively.

In an embodiment, each of the chutes is a through groove, each of the ends of the roller shaft is provided with a shaft cap, and the shaft cap protrudes from one of the chutes and radially along the roller shaft.

In an embodiment, an end surface of the rolling support block is provided with openings, and each of the openings communicates with the chutes and the lifting groove.

The present disclosure further provides a battery rack capable of reducing probability of dent deformation of battery packs.

In a second aspect, a battery rack is further provided according to embodiments of the present disclosure. The battery rack is configured to fixedly support one or more battery packs pushed-in and includes at least four stringers and the above beams, each of the beams is fixed horizontally on the stringers, the rolling support block of the beam is disposed on a side of the battery rack where each of the battery packs is pushed-in, and a rotation direction of the roller is same with a direction along which each of the battery packs is pushed-in or pulled-out.

The present disclosure further provides a battery pack assembly capable of reducing probability of dent deformation of battery packs.

In a third aspect, a battery pack assembly is further provided according to embodiments of the present disclosure. The battery pack assembly includes one or more battery packs and the above battery rack, and each of the battery packs is disposed on the battery rack.

### Beneficial effects of the application:

The beam according to the present disclosure is provided with the downwards oblique chutes, so that the roller shaft is slidable and disposed in the chutes, and the roller is capable of rolling and disposed in the lifting groove through the roller shaft. At the same time, the drive positioning member is disposed by extending into or retracting from the lifting groove. When the roller is required to rise from the lifting groove, the drive positioning member extends into the lifting groove to provide an acting force on the roller shaft and drive the roller shaft to slide upwards in the chutes, so that the roller protrudes from the lifting groove. When the roller and the roller shaft are raised to a suitable position, the drive positioning member remains in an extending state to provide a support force for the roller shaft, so that the roller shaft is fixedly raised in the chutes to realize positioning of the roller, so that the roller rotates in a fixed position. When the roller is no longer needed, the drive positioning member retracts from the lifting groove, and the roller shaft slides downwards in the chutes under action of gravity after losing the support force, thereby driving the roller to retract into the lifting groove. Therefore, an effect of raising the roller when using the roller and dropping the roller when the roller is not used is achieved.

The battery rack provided in the present disclosure applies the above beam, and the rolling support block of the beam is disposed on a side of the battery rack where a battery pack is pushed-in, so that during a process from a beginning of the battery pack pushed-in or pulled-out of the battery rack until the battery pack completely pushed-in or pulled-out of the battery rack, there is always at least one roller in contacting with a lower end surface of the battery pack to effectively reduce a friction when pushing and pulling the battery pack, thereby making the push and pull of the battery pack more labor-saving. When the battery pack is fixedly disposed on the battery rack, the roller retracts to the lifting groove, and the battery pack and the beam are in a surface-to-surface contact, which reduces a concentrated stress acting on the battery pack and reduces probability of dent deformation of the battery pack.

The battery pack assembly provided in the present disclosure applies the above battery rack, which can effectively reduce probability of dent deformation of battery packs.

### BRIEF DESCRIPTION OF THE DRAWINGS

FIG. 1 is a schematic structural view of a beam provided according to an embodiment of the present disclosure.
FIG. 2 is an enlarged structural view of a rolling support block provided according to an embodiment of the present disclosure.
FIG. 3 is a cross-sectional view of a roller in a state of protruding from a lifting groove according to an embodiment of the present disclosure.
FIG. 4 is a cross-sectional view of a roller in a state of retracting into a lifting groove according to an embodiment of the present disclosure.
FIG. 5 is a schematic structural view of a battery pack assembly provided according to an embodiment of the present disclosure.

### Reference numerals:

1, beam; 2, stringer; 3, battery pack; 100, beam body; 200, rolling support block; 210, lifting groove; 220, first sidewall; 221, chute; 230, second sidewall; 231, thickened wall; 240, opening; 310, roller; 320, roller shaft; 321, shaft cap; 400, drive positioning member; 500, pusher lump; 510, support groove.

### DETAILED DESCRIPTION OF THE EMBODIMENT

In description of the present disclosure, unless otherwise specified and defined, terms "connected with", "connected" and "fixed" should be understood in a broad sense, for example, it may be a fixed connection, a detachable connection, or a whole; it may be a mechanical connection or an electrical connection; it may be a directly connection or an indirectly connection through an intermediate media; and it may be an internal communication of two components or an interaction relationship between two components. For those skilled in the art, meanings of the above terms in the present disclosure can be understood according to situations.

In the present disclosure, unless otherwise specified and defined, a first feature is disposed "on" or "under" a second feature may include a direct contact between the first feature and the second feature, or a contact between the first feature and the second feature through other features rather than the direct contact. Moreover, that the first feature is disposed "up", "above", and "on" the second feature includes that the first feature is right above or obliquely above the second feature, or only indicate that a horizontal height of the first feature is greater than a horizontal height of the second feature. That the first feature is disposed "under", "below", or "underneath" of the second feature include that the first feature is right below or obliquely below the second feature, or only indicate that the horizontal height of the first feature is less than the horizontal height of the second feature.

In the description of this embodiment, terms indicating orientation or location relationships such as "up", "down", "left", and "right" are based on orientation or location relationships shown in drawings, which are only for a convenience of description and simplified operation, rather than indicating or implying that devices or elements referred to must have a specific orientation, be constructed and operated in a specific orientation, so it cannot be understood as a limitation of the present application. In addition, terms "first" and "second" are only used to distinguish in terms of description and have no special meanings.

The embodiments provide a beam capable of achieving effect of raising a roller when using the roller and dropping the roller when the roller is not used.

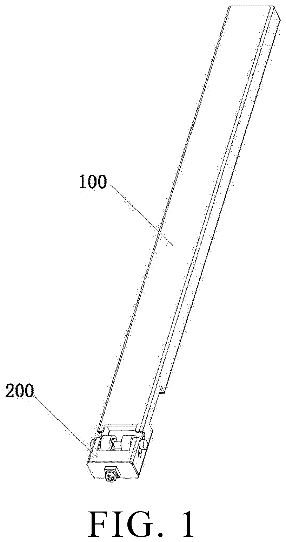

Exemplarily, as shown in FIG. 1 to FIG. 4, the beam includes a beam body 100, a rolling support block 200, a roller assembly, and a drive positioning member 400. The rolling support block 200 is fixedly connected with the beam body 100, and both end surfaces of the rolling support block 200 are level with end surfaces of the beam body 100. A lifting groove 210 is defined on one of the end surfaces of the rolling support block 200. First sidewalls 220 of the rolling support block 200 are provided with chutes 221 thereon, and the chute 221 is downwards oblique. The chute 221 includes a first position and a second position, and the first position is higher than the second position. The roller assembly includes at least one roller 310 and a roller shaft 320. Both ends of the roller shaft 320 is slidable and disposed in the chutes 221, and the roller 310 is capable of rolling and disposed in the lifting groove 210 through the roller shaft 320. The roller shaft 320 can slide downwards in the chutes 221 to drive the roller 310 to retract into the lifting groove 210. The drive positioning member 400 is disposed by extending into or retracting from the lifting groove 210. The roller shaft 320 is located in the first position when the drive positioning member 400 extends into the lifting groove 210 and located in the second position when the drive positioning member 400 retracts from the lifting groove 210.

The above beam is provided with the downwards oblique chutes 221, so that the roller shaft 320 can slide in the chutes 221, and the roller 310 can roll in the lifting groove 210 through the roller shaft 320, and the drive positioning member 400 is disposed by extending into or retracting from the lifting groove 210. When the roller 310 is required to rise from the lifting groove 210, the drive positioning member 400 extends into the lifting groove 210 to provide an acting force on the roller shaft 320 and drive the roller shaft 320 to slide upwards in the chutes 221, so that the roller 310 protrudes from the lifting groove 210. When the roller 310 and the roller shaft 320 are raised to a suitable position, the drive positioning member 400 remains in an extending state to provide a support force for the roller shaft 320, so that the roller shaft 320 is fixedly raised in the chutes 221 to realize positioning of the roller 310, so that the roller 310 rotates in a fixed position. When the roller 310 is no longer needed, the drive positioning member 400 retracts from the lifting groove 210, and the roller shaft 320 slides downwards in the chutes 221 under action of gravity after losing the support force, thereby driving the roller 310 to retract into the lifting groove 210. Therefore, an effect of raising the roller 310 when using the roller 310 and dropping the roller 310 when the roller 310 are not used is achieved.

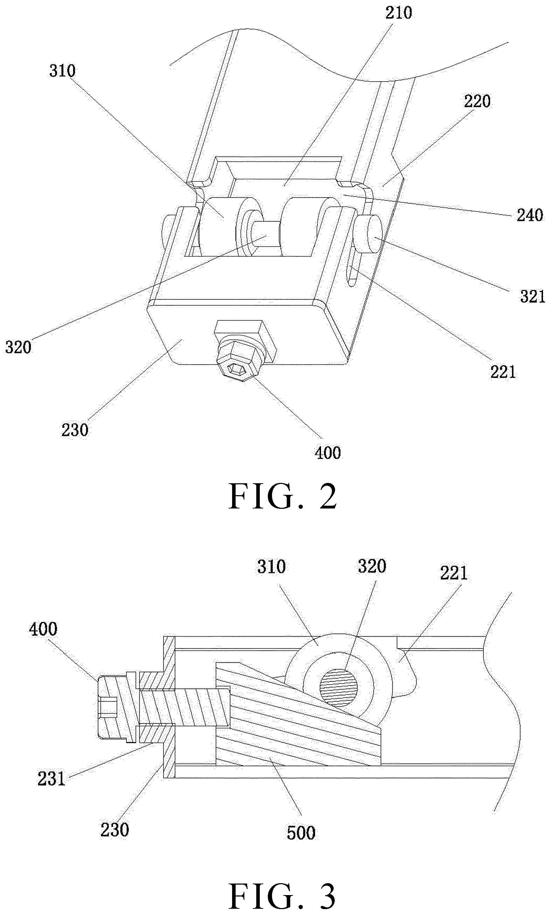

Exemplarily, as shown in FIG. 2 to FIG. 4, the above beam further includes a pusher lump 500 movably disposed in the lifting groove 210. An upper surface of the pusher lump 500 is an oblique plane having an oblique direction opposite to an oblique direction of the chute 221. The roller shaft 320 is connected with the oblique plane to move. When the drive positioning member 400 extends into the lifting groove 210, the drive positioning member 400 is connected with and drives the pusher lump 500 to provide an acting force on the pusher lump 500, thereby achieving effect that the drive positioning member 400 drives the roller shaft 320 to move upwards and provides the support force for the roller shaft 320. In addition, when the roller shaft 320 is fixedly raised in the chutes 221, the oblique plane of the pusher lump 500 can provide the support force for the roller shaft 320, so as to improve stability of the roller shaft 320 which raised in the chutes 221.

Exemplarily, as shown in FIG. 2 to FIG. 4, the above drive positioning member 400 may be a bolt passing through a second sidewall 230 of the rolling support block 200 and threaded with the second sidewall 230. The bolt can be twisted to extend into or retract from the lifting groove 210, thereby simplifying an operation which allows the drive positioning member 400 to extend into or retract from the lifting groove 210. In addition, when the roller shaft 320 is fixedly raised in the chutes 221, the bolt provides the support force for the roller shaft 320 through the pusher lump 500, and the threaded connection between the bolt and the second sidewall 230 has effect of providing the support force for the roller shaft 320 sustainably and steady.

Exemplarily, as shown in FIG. 2 to FIG. 4, the above pusher lump 500 is provided with a support groove 510 defined on a sidewall adjacent to the bolt. The bolt can extend into the support groove 510 and abut against the pusher lump 500. When the roller 310 protrudes from the lifting groove 210, the roller shaft 320 applies a press force on the oblique plane of the pusher lump 500, a direction of the press force is perpendicular to the oblique plane of the pusher lump 500, and a lower end surface of the support groove 510 provides an upward support force for the bolt, thereby achieving effect of improving stability and reliability of the push block 500 supporting the roller 320.

Exemplarily, as shown in FIG. 2 to FIG. 4, the second sidewall 230 is provided with a thickened wall 231 protruded thereon. The above bolt successively passes through the thickened wall 231 and the second sidewall 230, and is threaded with the thickened wall 231, thereby increasing a threaded connection area of the bolt and the rolling support block 200, and improving the stability and reliability of the bolt providing the support force for the roller shaft 320.

Exemplarily, as shown in FIG. 2 to FIG. 4, a number of the above rollers 310 is two, the two rollers 310 are disposed on both sides of the roller shaft 320, and the pusher lump 500 is disposed between the two rollers 310, so as to improve the stability of the roller shaft 320 when sliding in the chutes 221 and when fixedly raised in the chutes 221.

Exemplarily, continuing to refer to FIG. 2 to FIG. 4, a number of the above chutes 221 is two, and two ends of the roller shaft 320 is slidable and disposed in the two chutes 221, respectively, so as to improve the stability of the roller shaft 320 when sliding in the chutes 221 and when fixedly raised in the chutes 221.

Exemplarily, continuing to refer to FIG. 2 to FIG. 4, the above chute 221 is a through groove. Each end of the roller shaft 320 is provided with a shaft cap 321, and the shaft cap 321 protrudes from the chute 221 and radially along the roller shaft 320, so as to prevent the roller shaft 320 from sliding out of the chutes 221.

Exemplarily, continuing to refer to FIG. 2 to FIG. 4, the end surface of the above rolling support block 200 is provided with openings 240, and each of the openings 240 communicates with the chutes 221 and the lifting groove 210. If the roller shaft 320 and/or the roller 310 is damaged, the roller 310 and the roller shaft 320 can be easily taken out and put in through the openings 240, thereby facilitating replacement and maintenance of the roller shaft 320 and/or the roller 310.

The beam according to the embodiments is provided with the downwards oblique chutes 221, so that the roller shaft 320 is slidable and disposed in the chutes 221, and the roller 310 is capable of rolling and disposed in the lifting groove 210 through the roller shaft 320. At the same time, the drive positioning member 400 is disposed by extending into or retracting from the lifting groove 210. When the roller 310 is required to rise from the lifting groove 210, the drive positioning member 400 extends into the lifting groove 210 to provide an acting force on the roller shaft 320 and drive the roller shaft 320 to slide upwards in the chutes 221, so that the roller 310 protrudes from the lifting groove 210. When the roller 310 and the roller shaft 320 are raised to a suitable position, the drive positioning member 400 remains in an extending state to provide a support force for the roller shaft 320, so that the roller shaft 320 is fixedly raised in the chutes 221 to realize positioning of the roller 310, so that the roller 310 rotates in a fixed position. When the roller 310 is no longer needed, the drive positioning member 400 retracts from the lifting groove 210, and the roller shaft 320 slides downwards in the chutes 221 under action of gravity after losing the support force, thereby driving the roller 310 to retract into the lifting groove 210. Therefore, an effect of raising the roller 310 when using the roller 310 and dropping the roller 310 when the roller 310 are not used is achieved. In addition, the beam provided according to the embodiments is simple in structure and convenient in operation, suitable for wide use.

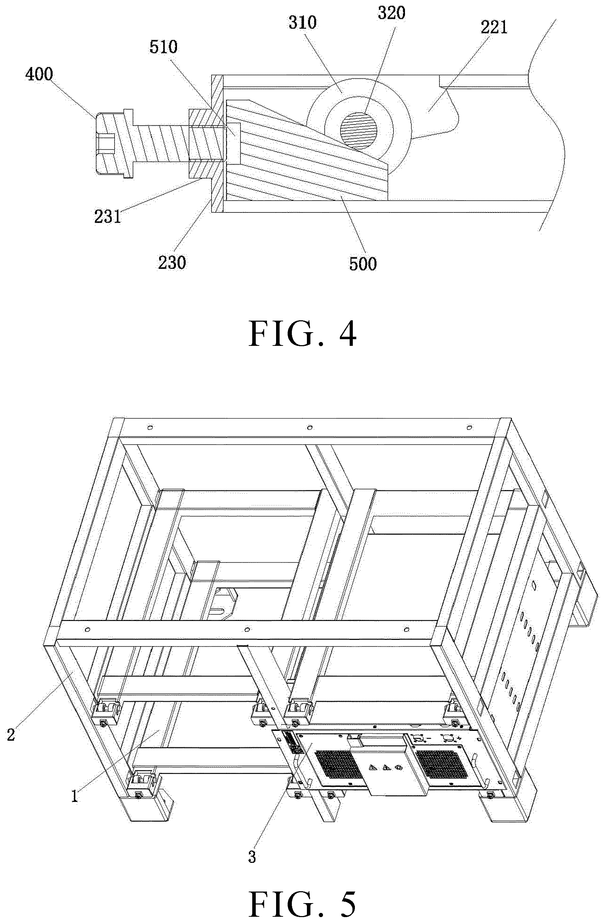

A battery rack is further provided according to the embodiments, as shown in FIG. 5, the battery rack includes at least four stringers 2 and the above beams 1. The beam 1 is fixed horizontally on the stringers 2, and the rolling support block 200 of the beam 1 is disposed on a side of the battery rack where a battery pack 3 is pushed-in. A rotation direction of the roller 310 is same with a direction along which the battery pack 3 is pushed-in or pulled-out, so that during a process from a beginning of the battery pack 3 pushed-in or pulled-out of the battery rack until the battery pack 3 completely pushed-in or pulled-out of the battery rack, there is always at least one roller 310 in contacting with a lower end surface of the battery pack 3 to effectively reduce a friction when pushing and pulling the battery pack 3, thereby making the push and pull of the battery pack 3 more labor-saving and also saving the time of pushing and pulling the battery pack 3. When the battery pack 3 is fixedly disposed on the battery rack, the roller 310 retracts to the lifting groove 210, and the battery pack 3 and the beam 1 are in a surface-to-surface contact, which reduces a concentrated stress acting on the battery pack and reduces probability of dent deformation of the battery pack 3.

In the technical solutions provided according to the embodiments, as shown in FIG. 5, each of the stringers 2 is provided with one or more above beams 1 fixed thereon to achieve the effect of rolling connection between the rolls 310 and left and right sides of each battery pack 3 when the battery pack 3 is pushed-in and pulled-out. In other embodiments, the above beam 1 may be disposed between two adjacent stringers 2. Or each of the stringers 2 may be provided with one or more above beams 1 fixed thereon, and the above beam 1 may also be provided between each stringer 2 at the same time. As long as the rolling support block 200 of the beam 1 is disposed at the side of the battery rack where the battery pack 3 pushed-in, and the rotation direction of the roller 310 is same with the direction along which the battery pack 3 is pushed-in or pulled out.

A battery pack assembly is further provided according to the embodiments, continuing to refer to FIG. 5, the battery pack assembly includes the battery packs 3 and the above battery rack, and the battery packs 3 are disposed on the battery rack. After pushing the battery pack 3 into the battery rack, the bolt is twisted to retract from the lifting groove 210, and the bolt retracting from the lifting groove 210 no longer provides the support force for the roller shaft 320. The roller shaft 320 that loses the force slides downwards in the chutes 221 under the action of gravity, so as to drive the roller 310 to retract into the lifting groove 210. At this time, the battery pack 3 and the beam 1 are in a surface-to-surface contact, which reduces probability of dent deformation of the battery pack 3.

## Claims

1. A beam, comprising a beam body (100), and further comprising:
a rolling support block (200), fixedly connected with the beam body (100), wherein an end surface of the rolling support block (200) is level with an end surface of the beam body (100), and the end surface of the rolling support block (200) is provide with a lifting groove (210); a first sidewall (220) of the rolling support block (200) is provided with chutes (221), each of the chutes (221) is downwards oblique and comprises a first position and a second position, where the first position is higher than the second position;
a roller assembly, comprising one or more rollers (310) and a roller shaft (320), wherein both ends of the roller shaft (320) are slidable and disposed in the chute (221), and each of the rollers (310) is capable of rolling and disposed in the lifting groove (210) through the roller shaft (320);
a drive positioning member (400), disposed by extending into or retracting from the lifting groove (210), wherein the roller shaft (320) is located in the first position when the drive positioning member (400) extends into the lifting groove (210) and located in the second position when the drive positioning member (400) retracts from the lifting groove (210).

2. The beam according to claim 1, further comprising a pusher lump (500), wherein the pusher lump (500) is movably disposed in the lifting groove (210), an upper surface of the pusher lump (500) is an oblique plane having an oblique direction opposite to an oblique direction of each of the chutes (221), the roller shaft (320) is connected with the oblique plane to move, and the drive positioning member (400) is connected with and drives the pusher lump (500) when the drive positioning member (400) extends into the lifting groove (210).

3. The beam according to claim 1 or 2, wherein the drive positioning member (400) is a bolt passing through a second sidewall (230) of the rolling support block (200) and threaded with the second sidewall (230).

4. The beam according to claim 3, wherein the second sidewall (230) is provided with a thickened wall (231) protruded thereon, and the bolt successively passes through the thickened wall (231) and the second sidewall (230), and is threaded with the thickened wall (231).

5. The beam according to claim 2, wherein a number of the rollers (310) is two, the two rollers (310) are disposed on both sides of the roller shaft (320), and the pusher lump (500) is disposed between the two rollers (310).

6. The beam according to claim 1 or 2, wherein a number of the chutes (221) is two, and two ends of the roller shaft (320) are slidable and disposed in the two chutes (221), respectively.

7. The beam according to claim 6, wherein each of the chutes (221) is a through groove, each of the ends of the roller shaft (320) is provided with a shaft cap (321), and the shaft cap (321) protrudes from one of the chutes (221) and radially along the roller shaft (320).

8. The beam according to claim 1 or 2, wherein an end surface of the rolling support block (200) is provided with openings (240), and each of the openings (240) communicates with the chutes (221) and the lifting groove (210).

9. A battery rack, configured to fixedly support one or more battery packs (3) pushed-in, and comprising at least four stringers (2) and a plurality of beams (1) according to any one of claim 1 to claim 8, wherein each of the beams (1) is fixed horizontally on the stringers (2), the rolling support block (200) of the beam (1) is disposed on a side of the battery rack where each of the battery packs (3) is pushed-in, and a rotation direction of each of the rollers (310) is same with a direction along which each of the battery packs (3) is pushed-in or pulled-out.

10. A battery pack assembly, comprising one or more battery pack (3) and the battery rack as claimed in claim 9, wherein each of the battery packs (3) is disposed on the battery rack.
